# EUROPÄISCHE PATENTSCHRIFT

(11) **EP 1 071 110 B1**
(45) Veröffentlichungstag und Bekanntmachung des Hinweises auf die Patenterteilung: **15.09.2004**
(21) Anmeldenummer: 00113336.2
(22) Anmeldetag: 23.06.2000
(51) Int. Cl.: H01J 9/20, H01J 9/22

(54) **Verfahren zum Beschichten von Lampenkolben**
Method for coating lamp vessels
Procédé de dépôt d'une couche sur un verre de lampe

(30) Priorität: 22.07.1999 DE 19933893
(43) Veröffentlichungstag der Anmeldung: 24.01.2001
(73) Patentinhaber: Patent-Treuhand-Gesellschaft für elektrische Glühlampen mbH, 81543 München (DE)
(72) Erfinder: Jerebic, Simon, 93049 Regensburg (DE); Vollkommer, Frank, 82131 Buchendorf (DE)

(56) Entgegenhaltungen:
- GB-A- 697 998
- GB-A- 697 999
- GB-A- 758 968
- PATENT ABSTRACTS OF JAPAN vol. 007, no. 036 (E-158), 15. Februar 1983 (1983-02-15) & JP 57 187830 A (MATSUSHITA DENSHI KOGYO KK), 18. November 1982 (1982-11-18)
- PATENT ABSTRACTS OF JAPAN vol. 009, no. 130 (C-284), 5. Juni 1985 (1985-06-05) & JP 60 016834 A (MATSUSHITA DENSHI KOGYO KK), 28. Januar 1985 (1985-01-28)

## Beschreibung

Die vorliegende Erfindung bezieht sich auf ein Verfahren zur Herstellung von Lampen, bei dem ein Lampenrohr mit einem Beschichtungsmittel beschichtet und das Beschichtungsmittel getrocknet wird.

In verschiedenen Bereichen der Herstellung von Lampen ist die Beschichtung von im wesentlichen rohrförmigen Lampengefäßen oder Teilen davon notwendig. Der wichtigste Anwendungsfall sind Leuchtstoffschichten, weswegen sich die Erfindung bevorzugt auf Leuchtstofflampen bezieht. Jedoch ist dies nicht notwendig; vielmehr kann es sich auch um Reflexionsschichten oder andere Schichten handeln, die auch bei anderen Lampentypen eingesetzt werden können.

Dabei geht die Erfindung von einem Verfahren aus, bei dem ein flüssiges oder zumindest fließfähiges Beschichtungsmittel auf das Lampenrohr aufgebracht wird und danach getrocknet wird. Durch den Trocknungsschritt wird aus dem fließfähigen Beschichtungsmittel eine feste Schicht hergestellt. Im allgemeinen geschieht dies durch Verdunsten oder Verdampfen einer Flüssigkeit, in der das zurückbleibende Beschichtungsmittel zuvor gelöst oder suspendiert war.

Bekannt ist die sogenannte Beschlämmung von Leuchtstofflampenglasrohren mit Leuchtstoffpasten, die in pastenförmigen, also viskos fließfähigem, Zustand auf die Innenwand eines Glasrohres aufgebracht werden. Dabei bringt man die zu beschichtende Innenwand des Glasrohres mit der Leuchtstoffpaste in Kontakt, beispielsweise durch Durchspülen des Glasrohres. Daraufhin läßt man die Leuchtstoffpaste ablaufen, bis eine relativ dünne Schicht auf der Glaswand verbleibt. Das Glasrohr wird dann in einem Ofen getrocknet. Ein wesentliches Qualitätskriterium hierbei ist die möglichst konstante Einhaltung einer vorgegebenen Schichtdicke. Einerseits soll die Glaswand vollständig bedeckt sein und der Durchtritt von UV-Strahlung durch die Leuchtstoffschicht vermieden werden, andererseits sind bei zu dicken Leuchtstoffschichten Verluste durch Vielfachreflexion sichtbarer Photonen in den Leuchtstoffschichten unvermeidlich. Ferner spielen die Materialkosten für die Leuchtstoffpaste keine unwesentliche Rolle.

Das dieser Erfindung zugrundeliegende technische Problem besteht darin, ein neues Verfahren zum Beschichten von Lampenrohren mit einem Beschichtungsmittel anzugeben, mit dem besonders gleichmäßige Schichtdikken erreicht werden können.

Erfindungsgemäß wird dies Problem gelöst durch ein Verfahren zur Herstellung von Lampen, bei dem ein Lampenrohr mit einem Beschichtungsmittel beschichtet und das Beschichtungsmittel getrocknet wird, dadurch gekennzeichnet, daß ein Flüssigkeitsspiegel des Beschichtungsmittels entlang dem Lampenrohr abgesenkt wird und eine lokale Trocknungszone einer durch das Absinken des Flüssigkeitsspiegels zurückgelassenen Schicht des Beschichtungsmittels auf dem Lampenrohr dem sinkenden Flüssigkeitsspiegel in im wesentlichen konstantem zeitlichen Abstand nachgeführt wird.

Erfindungsgemäß wird also das Ablaufen des überschüssigen Beschichtungsmittels von der Wand des Lampenrohrs in besonders kontrollierter Weise durch Absinkenlassen eines Flüssigkeitsspiegels bewerkstelligt. Es hat sich nämlich herausgestellt, daß Laufspuren oder gar Tropfen eine wesentliche Ursache für Schichtungleichmäßigkeiten bei konventionellen Verfahren sind.

Darüber hinaus sieht die Erfindung vor, eine Trocknungszone in im wesentlichen zeitlich konstantem Abstand dem sinkenden Flüssigkeitsspiegel folgen zu lassen. Dadurch vergeht für alle Teile der Schicht im wesentlichen die gleiche Zeit zwischen dem Absinken des Flüssigkeitsspiegels an dieser Stelle und der Trocknung. Es hat sich nämlich weiterhin herausgestellt, daß die Ungleichmäßigkeit der Trocknungszeit für verschiedene Teile der hergestellten Schicht eine weitere Hauptursache für Ungleichmäßigkeiten sind.

So ist es beim Auslaufenlassen eines eingespülten Beschichtungsmittels und nachfolgendem Trocknen des gesamten Lampenrohres in einem Ofen unvermeidlich, daß die höher gelegenen Teile der Schicht dünner werden als die tiefer gelegenen Teile, weil das Beschichtungsmittel, das von den höher gelegenen Teilen abläuft, noch die tiefer gelegenen Teile passiert. Dadurch verbleibt in den höher gelegenen Teilen eine geringere Restschichtdicke als in den tiefer gelegenen Teilen. Es ist bei den konventionellen Verfahren auch kaum möglich, mit dem Trocknungsprozeß auf diese Umstände Rücksicht zu nehmen, indem man ihn beispielsweise in zeitlicher Reihenfolge von oben nach unten fortlaufend durchführt. Und zwar aus dem Grunde, daß die auslaufenden Beschichtungsmittelreste keine definierte zeitliche Abfolge für den Trocknungsprozeß vorgeben. Vielmehr handelt es sich um ein eher undefiniertes und statistisch variierendes Auslaufen, das auch an Teilen des Lampenrohres auf gleicher Höhe nicht zwangsläufig die gleiche Schichtdicke hinterläßt, weil es zu der bereits erwähnten Bildung von Laufspuren oder gar Tropfen kommt.

Vorzugsweise liegen die Schichten innerhalb des Lampenrohres, wobei dann der Flüssigkeitsspiegel in dem Lampenrohr abgesenkt wird. Dazu wird das Lampenrohr zunächst mit dem Beschichtungsmittel gefüllt, woraufhin das Beschichtungsmittel dann als Flüssigkeitssäule, d. h. mit einem weitgehend definierten oberen Flüssigkeitsspiegel ausläuft. Hierbei ist anzumerken, daß der Begriff Flüssigkeit" bei der Beschreibung dieser Erfindung auch viskose, jedoch noch fließfähige Medien mitumfaßt. Flüssigkeit meint hier also auch Brei oder Paste, solange eine Fließfähigkeit vorliegt.

Weiterhin ist das Lampenrohr bevorzugt vertikal angeordnet, wodurch sich die beste Gleichmäßigkeit über den Umfang des zu beschichtenden Lampenrohres (Innen- oder Außenumfang) erzielen läßt.

Bislang war von einer Trocknungszone" in einem allgemeinen Sinn die Rede. Tatsächlich ist die Erfindung auch so allgemein zu verstehen, daß jede Form der Erzeugung einer Trocknungszone, die insoweit lokal definiert ist, daß von einer Nachführung in zeitlich konstantem Abstand zu dem Flüssigkeitsspiegel gesprochen werden kann, möglich ist. Im allgemeinen wird eine Trocknungseinrichtung abgestimmt auf das Absinken des Flüssigkeitsspiegels relativ zu dem Lampenrohr bewegt werden. Es ist jedoch auch möglich, bei einer feststehenden Beziehung zwischen einer Trocknungseinrichtung und dem Lampenrohr eine sich bewegende Trocknungszone zu erzeugen, beispielsweise durch sequentiellen Einsatz verschiedener Trocknungszonen in einer Trocknungseinrichtung. Die lokale Definiertheit der Trocknungszonen bezieht sich dabei auch nur auf die dem Flüssigkeitsspiegel zugewandte Seite. Auf der anderen Seite, auf der das Beschichtungsmittel zumindest so weitgehend trocken ist, daß keine Schichtdickenveränderungen durch Fließprozesse mehr stattfinden können, spielt es keine grundsätzliche Rolle, wieweit die Trocknungszone ausgedehnt oder überhaupt definiert ist. Auch auf der dem Flüssigkeitsspiegel zugewandten Seite ist der Begriff der lokalen Definiertheit nicht so zu verstehen, daß eine scharfe Grenze der Trocknungszone vorliegen müßte. Für alle Teile der zu beschichtenden Wand des Lampenrohres im wesentlichen gleiche zeitliche Abstände vom Flüssigkeitsspiegel bis zu einer eine Schichtdicke festlegenden Trocknung reichen völlig aus, daher muß die Trocknungszone auch nur insoweit lokal definiert sein.

Vorzugsweise richtet sich die Erfindung auf zwei Varianten der Erzeugung einer solchen Trocknungszone. Bei der ersten Variante wird eine lokale Erwärmung des Beschichtungsmittels und/oder des Lampenrohres durchgeführt. Dies kann in günstiger Weise durch eine Relativbewegung zwischen dem Lampenrohr und einem das Lampenrohr umfassenden Ofen durchgeführt werden, wobei die Trocknungszone im allgemeinen etwas oberhalb des unteren Randes des Ofens liegt. Hierzu wird auf das erste Ausführungsbeispiel verwiesen.

Die zweite Variante besteht in der Zirkulation einer der Trocknung dienenden Gasatmosphäre. Z. B. kann dies geschehen durch Einführen eines zu dem Lampenrohr im wesentlichen parallelen Belüftungsrohres in das Lampenrohr und Nachführen in Bezug zu dem Flüssigkeitsspiegel. Durch das Belüftungsrohr läßt man dabei ein Trocknungsgas strömen. Dies kann durch Einströmenlassen durch das Belüftungsrohr oder auch durch Ansaugen oder Abführen durch das Belüftungsrohr und anderweitig Zuführen des Trocknungsgases geschehen. In jedem Fall kommt es darauf an, daß sich über dem Flüssigkeitsspiegel in einem gewissen Abstand eine Verwirbelungszone des Trocknungsgases ergibt, in der dann die Trocknung erfolgt. Die Verwirbelungszone bildet sich unter der dem Flüssigkeitsspiegel zugewandten Öffnung des Belüftungsrohres und sollte tiefer liegen als die Öffnungen zum Abführen bzw. Zuführen des Trocknungsgases des Lampenrohres (also nicht des Belüftungsrohres). Dann dringt die Trocknungsgasströmung nicht ganz bis zu dem Flüssigkeitsspiegel vor sondern strömt nur knapp unterhalb der Öffnung des Belüftungsrohres entlang und dann an der Außenseite des Belüftungsrohres weiter nach oben zu den erwähnten höherliegenden Öffnungen (bzw. richtungsumgekehrt). Hierzu wird auf das zweite Ausführungsbeispiel verwiesen. Das Trocknungsgas kann erwärmt sein; das ist jedoch nicht unbedingt notwendig.

Im Hinblick auf den zeitlich konstanten Abstand zwischen dem Flüssigkeitsspiegel und der Trocknungszone ergeben sich verschiedene Möglichkeiten. Zum einen kann man das Beschichtungsmittel einfach auslaufen lassen, z. B. durch eine Verengung zur Drosselung der Geschwindigkeit. Dabei ergibt sich natürlich ein nicht konstanter Geschwindigkeitsverlauf, dem die Trocknungszone entsprechend nachgeführt werden muß. Es ist jedoch auch möglich, einen Zeitverlauf für das Absinken des Flüssigkeitsspiegels vorzugeben, beispielsweise indem das Beschichtungsmittel kontrolliert abgeführt wird. Eine bevorzugte Ausführungsform sieht hierzu eine Schlauchpumpe vor, die einen mit dem Beschichtungsmittel kommunizierenden Schlauch abdrückt und den abgedrückten Bereich z. B. mit Hilfe eines Schrittmotors mit der gewünschten Geschwindigkeit verschiebt. Durch Wiederholung dieses Vorgangs pumpt die Schlauchpumpe über diesen Schlauch das Beschichtungsmittel ab, wodurch z. B. eine konstante Geschwindigkeit des Absenkens des Flüssigkeitsspiegels erreicht werden kann.

Eine andere Möglichkeit besteht in der Verwendung eines mit dem Beschichtungsmittel kommunizierenden Gefäßes. Wenn der Strömungswiderstand der Verbindung zwischen dem Beschichtungsmittel und diesem Gefäß bei der angestrebten Absenkgeschwindigkeit nicht zu hoch ist, so kann durch Absenken des Gefäßes das Absinken des Flüssigkeitsspiegels gesteuert werden.

Weiterhin kann ein Pumpkolben verwendet werden, der auf die Trocknungszone abgestimmt bewegt wird. Z. B. kann für die Bewegung ein Schrittmotor verwendet werden. Besonders vorteilhaft ist es, wenn die Bewegung des Pumpkolbens die gleiche Geschwindigkeit wie die angestrebte Bewegung des Flüssigkeitsspiegels hat. Dazu muß der Pumpquerschnitt dem Querschnitt des Flüssigkeitsspiegels entsprechen. Dann kann eine mechanische Kopplung verwendet werden, um die Trocknungszonenbewegung und die Bewegung des Flüssigkeitsspiegels aufeinander abzustimmen, beispielsweise eine mechanische Kopplung zwischen dem bereits erwähnten kurzen rohrförmigen Ofen und dem Pumpkolben oder zwischen dem Belüftungsrohr und dem Pumpkolben. Eine solche Kopplung kann auch bei anderen Pumpentypen sinnvoll sein.

Auch ist es möglich, die Ablaufgeschwindigkeit des Beschichtungsmittels, also die Bewegung des Flüssigkeitsspiegels, durch Beeinflussung eines Atmosphärendrucks über dem Flüssigkeitsspiegel oder in einem mit dem Beschichtungsmittel kommunizierenden Gefäß zu steuern.

Bei der Wahl des zeitlichen Abstandes zwischen dem Flüssigkeitsspiegel und der Trocknungsfront kann durch relativ kurze zeitliche Abstände weiter zu Vermeidung einer Tropfen- oder Laufspurbildung beigetragen werden. Es sollte natürlich vermieden werden, den Flüssigkeitsspiegel selbst zu trocknen. Es ist sinnvoll, den räumlichen Abstand kürzer als die Lampenrohrlänge zu wählen, wenngleich dies nicht unbedingt notwendig ist. Z. B. sind räumliche Abstände von 70 % der Lampenrohrlänge und darunter geeignet. Gerade im Hinblick auf einen kurzen zeitlichen Abstand ist es zur Vermeidung zu großer Absenkgeschwindigkeiten im allgemeinen zu empfehlen, bei noch kürzeren räumlichen Abständen zu arbeiten, beispielsweise bei höchstens 50 %, höchstens 30 % bzw. auch bei höchstens 15 % der Länge des Lampenrohres.

Es wurde bereits ausgeführt, daß die Erfindung vor allem für Leuchtstofflampen von Bedeutung ist. Dies gilt für konventionelle Leuchtstofflampen mit Hg-Entladungen, aber auch für Leuchtstofflampen, die für dielektrisch behinderte Entladungen ausgelegt sind, also zumindest eine dielektrisch behinderte Elektrode aufweisen. Eine wichtige Anwendung in beiden Fällen ist die Herstellung von Leuchtstoffschichten. Die Gründe für die Bedeutung der Gleichmäßigkeit für Leuchtstoffschichten wurden bereits oben angesprochen. Besonders bei Hg-Entladungen ist es wichtig, eine bestimmte Mindestdicke in allen mit der Entladung in Berührung kommenden Bereichen des Entladungsgefäßes sicherzustellen, da sonst die Gefahr einer Reaktion des Hg mit dem Glas des Entladungsgefäßes besteht. Die Folge sind Schwärzungen der Lampe und verkürzte Lebensdauern. Bei den Entladungslampen für dielektrisch behinderte Entladungen gibt es verschiedene Anwendungsbereiche, in denen die Homogenität der Lichtabstrahlung von besonderer Bedeutung ist. Zum einen sind dies Flachstrahler zur Hinterleuchtung von Anzeigen und Bildschirmen, zum zweiten aber auch stabförmige Lampen für Kopierer, Scanner und dgl. In all diesen mit Abbildungsprozessen zusammenhängenden Anwendungsfällen äußert sich eine Inhomogenität unmittelbar in Bildfehlern.

Vor allem bei den Entladungslampen für dielektrisch behinderte Entladungen (wie auch bei Lampen allgemein) werden jedoch auch Reflexionsschichten eingesetzt, um die Lichtabstrahlung zu einer Seite zu unterbinden und zur anderen Seite zu optimieren oder um die Gleichmäßigkeit der Lichtabstrahlung zu verbessern. Auch Inhomogenitäten der Schichtdicke der Reflexionsschichten sind daher zu vermeiden. Zum einen können sie direkten Einfluß auf die Lichtabstrahlungseigenschaften haben. Zum anderen können sie Inhomogenitäten einer auf die Reflexionsschicht aufzubringenden Leuchtstoffschicht nach sich ziehen.

Insbesondere erlaubt die Erfindung die Herstellung von relativ dicken gleichmäßigen Reflexionsschichten von beispielsweise über 3,5 und sogar über 4 oder 5 oder noch besser über 7 mg/cm². Solche Schichtdicken sind mit konventionellen Verfahren nur bei Inkaufnahme erheblicher Inhomogenitäten möglich.

Es sind auch relativ dicke Leuchtstoffschichten herstellbar, die konventionellerweise zu Problemen geführt haben. So sind Leuchtstoffschichten von über 1,2 oder sogar über 3 mg/cm² möglich.

Eine mögliche Anwendung sind auch Reaktionssperrschichten bei konventionellen Entladungslampen, die Reaktionen von Hg mit der Glaswand verhindern sollen. Diese Schichten (Alon-C-Schichten) sind im allgemeinen relativ dünn.

Im Folgenden wird die Erfindung anhand zweier konkreter Ausführungsbeispiele näher beschrieben, wobei die offenbarten Merkmale auch in anderen Kombinationen erfindungswesentlich sein können. Im einzelnen zeigt:
Figur 1 eine schematische Darstellung des ersten Ausführungsbeispiels; und
Figur 2 eine schematische Darstellung des zweiten Ausführungsbeispiels.

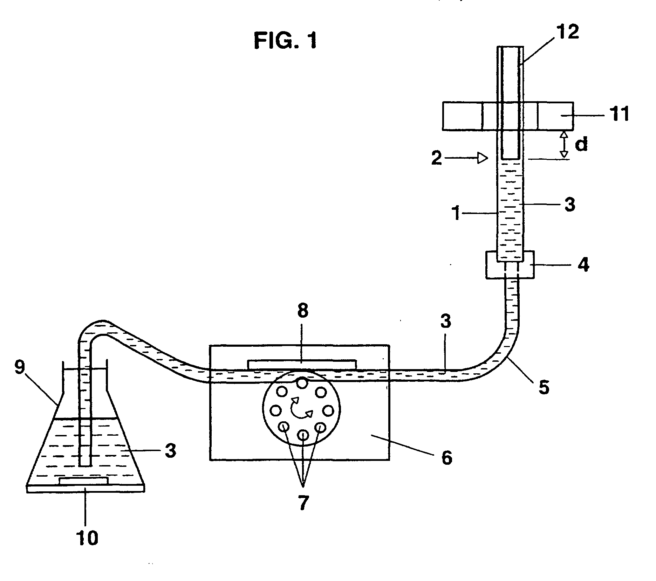

In Figur 1 ist das erste Ausführungsbeispiel dargestellt. Mit 1 ist ein Glasrohr bezeichnet, das für ein Entladungsgefäß einer Entladungslampe verwendet wird. Je nach Abmessungen und Auswahl des Beschichtungsmittels kann es sich dabei sowohl um ein Glasrohr für eine konventionelle Hg-Entladungslampe oder auch für eine rohrförmige Entladungslampe mit dielektrisch behinderten Entladungen handeln.

Das Glasrohr 1 ist vertikal angeordnet und bis zu einem Flüssigkeitsspiegel 2 mit einem Beschichtungsmittel 3 gefüllt. Das Beschichtungsmittel 3 enthält Leuchtstoffe in wäßriger Suspension. Es hat eine pastöse, zäh-fließfähige Konsistenz. Am unteren Ende ist das Glasrohr 1 mit einem Stopfen 4 abgedichtet, der eine Schlauchleitung 5 an das Innere des Glasrohres 1 anschließt. Daher ist auch die Schlauchleitung 5 mit dem Beschichtungsmittel 3 gefüllt.

An die Schlauchleitung 5 ist eine Schlauchpumpe 6 angeschlossen, die ein schrittmotorisch antreibbares Rad mit daran drehachsenparallel auf einem bestimmten Radius angeordneten Zapfen 7 aufweist. Die Zapfen 7 quetschen die Schlauchleitung 5, wenn sie im oberen Bereich des Rades angeordnet sind, gegen eine Anlage 8. Dadurch wird der Querschnitt der Schlauchleitung 5 zusammengedrückt. Indem das Rad (in der Figur im Gegenuhrzeigersinn) gedreht wird, werden die Zapfen 7 entlang der Schlauchleitung 5 und der Anlage 8 in von dem Glasrohr 1 wegführender Richtung bewegt, wodurch eine durch die Drehgeschwindigkeit des Rades steuerbare Pumpwirkung entsteht. Dadurch wird das Beschichtungsmittel 3 aus dem Glasrohr 1 über die Schlauchleitung 5 ausgepumpt und fließt in ein Gefäß 9 ab. Durch den Schrittmotor kann also die Lage des Flüssigkeitsspiegels 2 eingestellt und kontrolliert bewegt werden.

Das Gefäß 9 steht auf einem Magnetrührer 10. Dieser dient zum Vermischen der Beschichtungsmittelpaste 3 vor dem Beschichtungsvorgang. Zu diesem Zeitpunkt befindet sich das gesamte Beschichtungsmittel 3 in dem Gefäß 9 und kann durch einen der eben erfolgten Beschreibung entgegengesetzten Betrieb der Schlauchpumpe 6 in das Glasrohr 1 hochgepumpt werden, bis der Flüssigkeitsspiegel 2 den oberen Rand des Glasrohrs 1 erreicht. Dann erfolgt ein kontrollierter Ablauf mit einer kontrollierten Absenkung des Flüssigkeitsspiegels 2 bei konstanter Geschwindigkeit durch eine konstante Drehgeschwindigkeit des Rades der Schlauchpumpe 6 im Gegenuhrzeigersinn.

Dabei wird ein schematisch dargestellter Ofen 11 in einem konstanten zeitlichen, und wegen der gleichförmigen Bewegung des Flüssigkeitsspiegels 2 auch konstanten örtlichen Abstand zu dem Flüssigkeitsspiegel 2 nachgefüllt. Der örtliche Abstand ist in Figur 1 mit d bezeichnet. Zu beachten ist jedoch, daß es für die Erfindung eigentlich auf den zeitlichen Abstand ankommt und bei nicht gleichförmigen Bewegungen der örtliche Abstand d variieren kann.

Der Trocknungsofen 11 umschließt das Glasrohr 1 und erzeugt in seiner Mitte eine lokale Erwärmungszone, die der lokalen Trocknungszone entspricht. Wenn der Ofen 11 über einen Bereich des Glasrohres 1 mit daran haftendem Beschichtungsmittel 12 hinweggegangen ist, ist das Beschichtungsmittel 12 zumindest insoweit getrocknet, als daß keine Fließfähigkeit mehr vorliegt und die Schichtdicke nicht mehr beeinträchtigt werden kann. Natürlich können auch danach noch Resttrocknungsprozesse durch die Restwärme oder bei Raumtemperatur an der Atmosphäre stattfinden.

Der Ofen 11 wird durch eine nicht näher dargestellte mechanische Vorrichtung bewegt, die bei geeigneter Übersetzung von dem Schrittmotor der Schlauchpumpe 6 angetrieben sein kann. Dadurch sind der Ofen und die Schlauchpumpe mechanisch gekoppelt, wodurch die Abstimmung der Bewegungen automatisch erfolgt. Zur Veränderung des Abstandes d kann der Flüssigkeitsspiegel 2 verändert werden. Z. B. könnte die Schlauchpumpe 6 von ihrem Motor entkoppelbar sein, um durch manuelle Betätigung den Flüssigkeitsspiegel 2 einzustellen. Es ist natürlich auch möglich, die Befestigung des Ofens 11 an seiner Bewegungsvorrichtung verstellbar auszuführen.

Dieses Ausführungsbeispiel soll in erster Linie das Grundprinzip der Erfindung bei kontrolliertem Ablaufenlassen bzw. Abpumpen des Flüssigkeitsspiegels 2 darstellen. Es handelt sich insoweit nur um eine schematische Darstellung. In der tatsächlichen industriellen Anwendung könnte natürlich eine entsprechend angepaßte Apparatur verwendet werden, deren Einzelheiten sich dem Fachmann jedoch ohne weiteres aus der hier gegebenen Prinzipdarstellung erschließen.

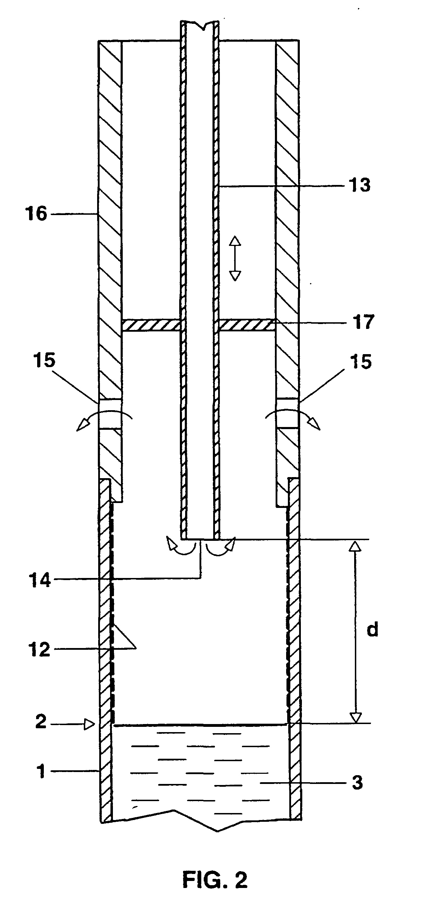

Figur 2 zeigt das zweite Ausführungsbeispiel, wobei der Darstellung in Figur 1 entsprechende Teile mit gleichen Bezugsziffern bezeichnet sind. Es werden im Folgenden die Abweichungen vom ersten Ausführungsbeispiel erläutert.

Das Beschichtungsmittel 3 ist in diesem Fall eine Ethanolsuspension von TiO₂ als Reflexionsstoff. Anstelle des Ofens 11 wird hier ein Belüftungsrohr 13 verwendet, das von oben in das Glasrohr 1 eingeführt wird. Das untere Ende des Belüftungsrohres 13 weist eine Öffnung 14 auf, aus der Luft ausströmt. Wird das Belüftungsrohr in einem bestimmten konstanten Abstand d, der wiederum wegen der gleichförmigen Geschwindigkeit einem konstanten zeitlichen Abstand entspricht, über dem Flüssigkeitsspiegel 2 gehalten, so bildet sich eine Luftverwirbelungszone unterhalb der Öffnung 14 aus. Unmittelbar über dem Flüssigkeitsspiegel 2 ergibt sich jedoch eine weitgehend ethanolgesättigte Atmosphäre, die nur sehr schwach verwirbelt wird. Eine eigentliche Trocknung erfolgt also nur im Bereich unmittelbar unterhalb der Öffnung 14, wo die Ethanoldämpfe des Beschichtungsmittels 3 an den Wänden des Glasrohres 1 aufgenommen und mit der abströmenden Luft außerhalb des Belüftungsrohres 13 jedoch innerhalb des Glasrohres 1 nach oben weggeführt werden. Im oberen Bereich sind Öffnungen 15 in einem Aufsatz 16 auf dem Glasrohr 1 vorgesehen, die für den Luftaustritt zur Verfügung stehen. Der Aufsatz 16 dient zum Führen des Belüftungsrohres 13 über eine Führungsscheibe 17 und ist ferner Teil der im einzelnen nicht dargestellten Halterung für das Glasrohr 1.

Ein beispielhafter Parametersatz für das obige zweite Ausführungsbeispiel lautet wie folgt. Bei einer Länge des Glasrohres 1 von 300 mm und einem Innendurchmesser von 8,6 mm ergibt sich bei einem Abstand zwischen dem Flüssigkeitsspiegel 2 und der Öffnung 14 von 43 mm bei einer konstanten Verschiebungsgeschwindigkeit von 6 mm/sek ein Schichtgewicht von 6,0 mg/cm². Ausgangsmaterial ist dabei ein Beschichtungsmittel aus 200 g TiO₂ und 60 ml Nitro-Cellulose (10 %) in 100 ml Ethanol. Die Trocknung erfolgt durch einen Luftdurchfluß von 28 l/h Luft bei einer Temperatur von etwa 22 °C. Das Belüftungsrohr 13 hat dabei einen Außendurchmesser von 1,6 mm und einen Innendurchmesser von 0,8 mm.

Dieses zweite Ausführungsbeispiel ist in der dargestellten Form vor allen Dingen für leicht flüchtige Trägerflüssigkeiten des Beschichtungsmittels 3 geeignet. Es kann jedoch auch erwärmte Luft zugeführt werden, so daß auch wäßrige Lösungen wie beim ersten Ausführungsbeispiel getrocknet werden können. Im übrigen ist es natürlich auch möglich, die Lösungen der beiden Ausführungsbeispiele zu kombinieren. Insgesamt bietet die Erfindung die Möglichkeit, auch bei größeren Schichtdicken außerordentlich gleichmäßige, fehlerfreie Schichten zu erzeugen. Sie ist ferner sehr zeitökonomisch, weil das Aufbringen des Beschichtungsmittels (Beschlämmen") und die Trocknung der entstehenden Schicht in einem Vorgang durchgeführt werden können.

## Patentansprüche

1. Verfahren zur Herstellung von Lampen, bei dem ein Lampenrohr (1) mit einem Beschichtungsmittel (3) beschichtet und das Beschichtungsmittel (3) getrocknet wird, **dadurch gekennzeichnet, daß** ein Flüssigkeitsspiegel (2) des Beschichtungsmittels (3) entlang dem Lampenrohr (1) abgesenkt wird und eine lokale Trocknungszone (11, 13) einer durch das Absinken des Flüssigkeitsspiegels (2) zurückgelassenen Schicht des Beschichtungsmittels (3) auf dem Lampenrohr (1) dem sinkenden Flüssigkeitsspiegel (2) in im wesentlichen konstantem zeitlichen Abstand nachgeführt wird.

2. Verfahren nach Anspruch 1, **dadurch gekennzeichnet, daß** das Lampenrohr (1) ein Leuchtstofflampen-Glasrohr ist.

3. Verfahren nach Anspruch 1 oder 2, **dadurch gekennzeichnet, daß** der Flüssigkeitsspiegel (2) in dem Lampenrohr (1) abgesenkt wird.

4. Verfahren nach einem der vorstehenden Ansprüche, **dadurch gekennzeichnet, daß** das Lampenrohr (1) vertikal angeordnet ist.

5. Verfahren nach einem der vorstehenden Ansprüche, **dadurch gekennzeichnet, daß** die Trocknungszone (11) durch eine lokale Erwärmung erzeugt und nachgeführt wird.

6. Verfahren nach Anspruch 5, **dadurch gekennzeichnet, daß** die lokale Erwärmung mit Hilfe eines rohrförmigen und das Lampenrohr (1) umfassenden Ofens (11) durchgeführt wird.

7. Verfahren nach einem der vorstehenden Ansprüche, **dadurch gekennzeichnet, daß** die Trocknungszone (13) durch Strömung einer Trocknungsgasatmosphäre erzeugt und nachgeführt wird.

8. Verfahren nach Anspruch 7, **dadurch gekennzeichnet, daß** bei dem Flüssigkeitsspiegel (2) ein im wesentlichen kolbenparalleles Belüftungsrohr (12) mit einer von dem Flüssigkeitsspiegel (2) beabstandeten Öffnung (13) nachgeführt wird, durch das das Trocknungsgas strömt.

9. Verfahren nach Anspruch 5 in Verbindung mit 7 oder 8, **dadurch gekennzeichnet, daß** das Trocknungsgas erwärmt ist.

10. Verfahren nach einem der vorstehenden Ansprüche, **dadurch gekennzeichnet, daß** der Flüssigkeitsspiegel (2) mit einer Schlauchpumpe (6) für das Beschichtungsmittel (3) abgesenkt wird.

11. Verfahren nach einem der Ansprüche 1-9, **dadurch gekennzeichnet, daß** der Flüssigkeitsspiegel (2) durch eine Relativbewegung zwischen dem Lampenrohr (1) und einem mit dem Beschichtungsmittel (3) an dem Lampenrohr (1) kommunizierenden und mit Beschichtungsmittel (3) gefüllten Gefäß (9) abgesenkt wird.

12. Verfahren nach einem der Ansprüche 1-9, **dadurch gekennzeichnet, daß** der Flüssigkeitsspiegel (2) durch eine abgestimmte Bewegung der Trocknungszone und eines den Flüssigkeitsspiegel (2) absenkenden Pumpkolbens einer Pumpe abgesenkt wird.

13. Verfahren nach Anspruch 10 oder 12, **dadurch gekennzeichnet, daß** die Pumpe von einem Schrittmotor bewegt wird.

14. Verfahren zumindest nach Anspruch 6 in Verbindung mit 10, 12 oder 13, **dadurch gekennzeichnet, daß** der Ofen (11) und die Pumpe mechanisch gekoppelt sind.

15. Verfahren zumindest nach Anspruch 8 in Verbindung mit 10, 12 oder 13, **dadurch gekennzeichnet, daß** das Belüftungsrohr (12) und die Pumpe mechanisch gekoppelt sind.

16. Verfahren nach einem der Ansprüche 1-9, **dadurch gekennzeichnet, daß** zum Steuern einer Ablaufgeschwindigkeit des Beschichtungsmittels (3) beim Absenken des Flüssigkeitsspiegels (2) der Druck über dem Flüssigkeitsspiegel (2) an/in dem Lampenrohr (1) oder eines weiteren Flüssigkeitsspiegels (2) in einem mit dem Beschichtungsmittel (3) kommunizierenden Gefäß gesteuert wird.

17. Verfahren nach einem der vorstehenden Ansprüche, **dadurch gekennzeichnet, daß** der Abstand zwischen dem Flüssigkeitsspiegel und der Trocknungszone höchstens 70 % der Länge des Lampenrohres (1) beträgt.

18. Verfahren nach einem der vorstehenden Ansprüche in Verbindung mit Anspruch 2, **dadurch gekennzeichnet, daß** das Leuchtstofflampenglasrohr (2) ausgelegt ist für einen Leuchtstofflampenbetrieb mit dielektrisch behinderten Entladungen.

19. Verfahren nach einem der vorstehenden Ansprüche in Verbindung mit Anspruch 2, **dadurch gekennzeichnet, daß** die Schicht des Beschichtungsmittels (3) eine Leuchtstoffschicht ist.

20. Verfahren nach Anspruch 19, **dadurch gekennzeichnet, daß** die getrocknete Schicht eine Stärke von zumindest 1 mg/cm² aufweist.

21. Verfahren nach einem der vorstehenden Ansprüche, **dadurch gekennzeichnet, daß** die Schicht des Beschichtungsmittels (3) eine Reflexionsschicht ist.

22. Verfahren nach Anspruch 21, **dadurch gekennzeichnet, daß** die getrocknete Schicht eine Stärke von zumindest 3,5 mg/cm² aufweist.

## Claims

1. Method for producing lamps, in which a lamp tube (1) is coated with a coating means (3) and the coating means (3) is dried, **characterized in that** a liquid level (2) of the coating means (3) is lowered along the lamp tube (1), and a local drying zone (11, 13) of a layer, left behind by the sinking of the liquid level (2), of the coating means (3) on the lamp tube (1) tracks the sinking liquid level (2) at a substantially constant time interval.

2. Method according to Claim 1, **characterized in that** the lamp tube (1) is a fluorescent lamp glass tube.

3. Method according to Claim 1 or 2, **characterized in that** the liquid level (2) is lowered in the lamp tube (1).

4. Method according to one of the preceding claims, **characterized in that** the lamp tube (1) is arranged vertically.

5. Method according to one of the preceding claims, **characterized in that** the drying zone (11) is produced by local heating and tracked.

6. Method according to Claim 5, **characterized in that** the local heating is carried out with the aid of a tubular oven (11) enveloping the lamp tube (1).

7. Method according to one of the preceding claims, **characterized in that** the drying zone (13) is produced by the flow of a drying gas atmosphere and tracked.

8. Method according to Claim 7, **characterized in that** in the case of the liquid level (2) an aerating tube (12) which is substantially parallel to the bulb is tracked with the aid of an opening (13) which is spaced apart from the liquid level (2) and through which the drying gas flows.

9. Method according to Claim 5 in conjunction with Claim 7 or 8, **characterized in that** the drying gas is heated.

10. Method according to one of the preceding claims, **characterized in that** the liquid level (2) is lowered with the aid of a hose pump (6) for the coating means (3).

11. Method according to one of Claims 1-9, **characterized in that** the liquid level (2) is lowered by means of a relative movement between the lamp tube (1) and a vessel (9) which communicates with the coating means (3) on the lamp tube (1) and is filled with coating means (3).

12. Method according to one of Claims 1-9, **characterized in that** the liquid level (2) is lowered by means of a coordinated movement of the drying zone and a piston, lowering the liquid level (2), of a pump.

13. Method according to Claim 10 or 12, **characterized in that** the pump is moved by a stepping motor.

14. Method at least according to Claim 6 in conjunction with Claim 10, 12 or 13, **characterized in that** the oven (11) and the pump are mechanically coupled.

15. Method at least according to Claim 8 in conjunction with Claim 10, 12 or 13, **characterized in that** the aerating tube (12) and the pump are mechanically coupled.

16. Method according to one of Claims 1-9, **characterized in that** for the purpose of controlling a discharge rate of the coating means (3) during lowering of the liquid level (2), the pressure above the liquid level (2) on/in the lamp tube (1), or of a further liquid level (2) is controlled in a vessel communicating with the coating means (3).

17. Method according to one of the preceding claims, **characterized in that** the distance between the liquid level and the drying zone is at most 70% of the length of the lamp tube (1).

18. Method according to one of the preceding claims in conjunction with Claim 2, **characterized in that** the fluorescent lamp glass tube (2) is designed for fluorescent lamp operation with dielectrically impeded discharges.

19. Method according to one of the preceding claims in conjunction with Claim 2, **characterized in that** the layer of the coating means (3) is a fluorescent layer.

20. Method according to Claim 19, **characterized in that** the dried layer has a thickness of at least 1 mg/cm².

21. Method according to one of the preceding claims, **characterized in that** the layer of the coating means (3) is a reflective layer.

22. Method according to Claim 21, **characterized in that** the dried layer has a thickness of at least 3.5 mg/cm².

## Revendications

1. Procédé de fabrication de lampes, dans lequel on revêt un tube (1) de lampe d'un agent (3) de revêtement et on sèche l'agent (3) de revêtement, **caractérisé en ce que** l'on abaisse un niveau (2) de liquide de l'agent (3) de revêtement le long du tube (1 ) de la lampe et on fait suivre, à un intervalle de temps sensiblement constant, le niveau (2) de liquide qui s'abaisse d'une zone (11, 13) locale de séchage d'une couche de l'agent (3) de revêtement laissée sur le tube (1) de la lampe par l'abaissement du niveau (2) du liquide.

2. Procédé suivant la revendication 1, **caractérisé en ce que** le tube (1 ) de lampe est un tube en verre de lampe fluorescente.

3. Procédé suivant la revendication 1 ou 2, **caractérisé en ce que** l'on abaisse le niveau (2) du liquide dans le tube (1) de lampe.

4. Procédé suivant l'une des revendications précédentes, **caractérisé en ce que** l'on dispose le tube (1) de lampe verticalement.

5. Procédé suivant l'une des revendications précédentes, **caractérisé en ce que** l'on produit la zone (11) de séchage et on fait suivre de la zone (11 ) de séchage par un échauffement local.

6. Procédé suivant la revendication 5, **caractérisé en ce que** l'on effectue le réchauffement local à l'aide d'un four (11 ) tubulaire et entourant le tube (1 ) de lampe.

7. Procédé suivant l'une des revendications précédentes, **caractérisé en ce que** l'on produit la zone (13) de séchage et on fait suivre de la zone (13) de séchage par écoulement d'une atmosphère gazeuse de séchage.

8. Procédé suivant la revendication 7, **caractérisé en ce que** l'on fait suivre le niveau (2) de liquide d'un tube (12) d'envoi d'air sensiblement parallèle à l'ampoule et ayant une ouverture (13) à distance du niveau (2) de liquide, tube dans lequel passe le gaz de séchage.

9. Procédé suivant la revendication 5 en liaison avec la 7 ou la 8, **caractérisé en ce que** l'on échauffe le gaz de séchage.

10. Procédé suivant l'une des revendications précédentes, **caractérisé en ce que** l'on abaisse le niveau (2) de liquide à l'aide d'une pompe (6) péristaltique de l'agent (3) de revêtement.

11. Procédé suivant l'une des revendications 1 à 9, **caractérisé en ce que** l'on abaisse le niveau (2) du liquide par un mouvement relatif entre le tube (1) de lampe et un récipient (9) communiquant avec l'agent (3) de revêtement sur le tube (1) de lampe et empli d'agent (3) de revêtement.

12. Procédé suivant l'une des revendications 1 à 9, **caractérisé en ce que** l'on abaisse le niveau (2) du liquide par un mouvement adapté de la zone de séchage et d'un piston, abaissant le niveau (2) du liquide, d'une pompe.

13. Procédé suivant la revendication 10 ou 12, **caractérisé en ce que** l'on met la pompe en mouvement par un moteur pas à pas.

14. Procédé suivant la revendication 6 en liaison avec la 10, 12 ou 13, **caractérisé en ce que** l'on couple mécaniquement le four (11 ) et la pompe.

15. Procédé au moins suivant la revendication 8 en liaison avec la 10, 12 ou 13, **caractérisé en ce que** l'on couple mécaniquement le tube (12) d'envoi d'air et la pompe.

16. Procédé suivant l'une des revendications 1 à 9, **caractérisé en ce que**, pour régler la vitesse d'écoulement de l'agent (3) de revêtement lors de l'abaissement du niveau (2) du liquide, on règle la pression au-dessus du niveau (2) de liquide sur/dans le tube (1) de lampe ou d'un autre niveau (2) de liquide dans un récipient communiquant avec l'agent (3) de revêtement.

17. Procédé suivant l'une des revendications précédentes, **caractérisé en ce que** la distance entre le niveau du liquide et la zone de séchage représente au plus 70 % de la longueur du tube (1) de lampe.

18. Procédé suivant l'une des revendications précédentes en liaison avec la revendication 2, **caractérisé en ce que** l'on conçoit le tube (2) de verre de lampe fluorescente pour un fonctionnement de lampes fluorescentes à décharges rendues incomplètes par voie diélectrique.

19. Procédé suivant l'une des revendications précédentes en liaison avec la revendication 2, **caractérisé en ce que** la couche de l'agent (3) de revêtement est une couche de substance luminescente.

20. Procédé suivant la revendication 19, **caractérisé en ce que** la couche séchée a une épaisseur d'au moins 1 mg/cm².

21. Procédé suivant l'une des revendications précédentes, **caractérisé en ce que** la couche de l'agent (3) de revêtement est une couche de réflexion.

22. Procédé suivant la revendication 21, **caractérisé en ce que** la couche séchée a une épaisseur d'au moins 3,5 mg/cm².
